# EUROPÄISCHE PATENTSCHRIFT

(11) **EP 0 852 735 B1**
(45) Veröffentlichungstag und Bekanntmachung des Hinweises auf die Patenterteilung: **18.12.2002**
(21) Anmeldenummer: 96932529.9
(22) Anmeldetag: 13.09.1996
(51) Int. Cl.: G01T 1/04

(54) **ALANINDOSIMETER UND VERFAHREN ZU DEREN HERSTELLUNG**
ALANINE DOSIMETER AND PROCESS FOR ITS PRODUCTION
DOSIMETRE A L'ALANINE ET SON PROCEDE DE PRODUCTION

(30) Priorität: 25.09.1995 DE 19535369
(43) Veröffentlichungstag der Anmeldung: 15.07.1998
(73) Patentinhaber: Universal-Beschichtung Wolfen GmbH, 06766 Wolfen (DE)
(72) Erfinder: MEHNERT, Reiner, D-04416 Markkleeberg (DE); HÜBNER, Gerhard, D-04451 Panitzsch (DE); GOHS, Uwe, D-01097 Dresden (DE); MARX, Jörg, D-06844 Dessau (DE); SELL, Ursula, D-04509 Pohritzsch (DE)
(74) Vertreter: Hertz, Oliver, Dr.
(86) Internationale Anmeldenummer: EP9604040
(87) Internationale Veröffentlichungsnummer: WO97012259

(56) Entgegenhaltungen:
- GB-A- 1 303 278
- US-A- 4 668 714
- INTERNATIONAL JOURNAL OF RADIATION APPLICATIONS AND INSTRUMENTATION PART A: APPLIED RADIATION AND ISOTOPES, Bd. 40, Nr. 10 - 12, 1.Januar 1989, Seiten 851-857, XP000087526 TOKIMA T ET AL: "POLYMER-ALANINE DOSIMETER AND COMPACT READER"
- PATENT ABSTRACTS OF JAPAN vol. 12, no. 361 (P-763), 28.September 1988 & JP 63 113382 A (HITACHI CABLE LTD), 18.Mai 1988,

## Beschreibung

Die Erfindung betrifft Alanindosimeter und Verfahren zu deren Herstellung.

Die zunehmende gewerbliche Anwendung energiereicher Strahlung in verschiedenen technischen und medizinischen Bereichen erfordert eine genaue Kontrolle der von einem Material oder biologischen Körper aufgenommenen Strahlungsdosis, um eine Qualitätsbewertung vornehmen oder Qualitätseinbußen bzw. Schäden infolge überhöhter Strahlungsbelastung vermeiden zu können und um die Wirtschaftlichkeit von Strahlungsanlagen für deren effektive Auslastung zu verbessern.

Die Alanindosimetrie ist eine allgemein anerkannte Methode zur Dosisbestimmung in verschiedenen Strahlenfeldern (z.B. Gamma-, Elektronen-, Neutronen-, Protonen-Strahlen, Strahlen schwerer Ionen). Alanindosimeter werden häufig als Referenz- oder Transferdosimeter eingesetzt. Das Prinzip der Alanindosimetrie beruht auf der Erzeugung langlebiger freier Radikale (ungepaarte Elektronen) in der Aminosäure Alanin (häufig L-α-Alanin) durch ionisierende Strahlen. Bei Zimmertemperatur überwiegt das Radikal CH₃-C*H-COOH. Die kristalline Struktur des Alanins wirkt einer Rekombination der Radikale entgegen. Lediglich bei Dosiswerten überhalb 3kGy sind Rekombinationen (Prozent pro Jahr) und Hyperfeinwechselwirkungen der Radikale zu beobachten. Die Anzahl der gebildeten freien Radiakale ist direkt proportional der absorbierten Strahlendosis. Die Bestimmung der Radikalmenge, die also der absorbierten Dosis und der eingesetzten Alaninmasse (mg_{Alanin}) proportional ist, erfolgt mittels der Elektronenspinresonanz-(ESR)-Spektroskopie.

Bisher erfolgte die Herstellung von Alanindosimetern unter Verwendung verschiedener formgebender Produktionsverfahren wie z.B. Kalt- oder Warmpressen, Extrusion oder Beschichtung (JP-A-01046677). Da Alanin eine kristalline Struktur besitzt, werden meist Bindemittel zur Gewährleistung einer stabilen Form bzw. einer mechanischen Stabilität eingesetzt, in denen durch ionsierende Strahlung ein im Vergleich zur Dosimetersubstanz Alanin vernachlässigbares, strahlungsinduziertes Eigensignal erzeugt wird. Die gewerblich verfügbare Palette reicht von Dosimetertabletten unteschiedlicher Geometrie (JP-A-62056884) über extrudierte Stränge/Kabel (EP-B-0 402 376, US-A-4 668 714) bis hin zu extrudierten Folien- (CS-87000689) und dünnen Filmdosimetern (JP-B-93065116). Derartige Dosimeter, die im Fall von Foliendosimetern allein durch die Dosimeterfolie gebildet sein können, werden an bestimmten Stellen des zu bestrahlenden Materials angebracht und anschließend die Strahlungsdosis durch Auswertung der Dosimeter qualitativ und quantitativ bestimmt.

Die Genauigkeit der Dosisbestimmung ist maßgeblich von der Qualität der eingesetzten Alanindosimeter abhängig, die z.B. durch die Dosimeter- und Chargenhomogenität, Reproduzierbarkeit und paramagnetische Zentren bestimmt wird. Die Dosimeterqualität ist besonders beim Einsatz geringer Alaninmengen (dünne Dosimeterfolie) und/oder der Messung niedriger Dosiswerte (z.B. in der Strahlentherapie) wichtig, da dort die Dosisbestimmung durch einen variablen, meist dosimeterabhängigen Untergrund erschwert sein kann.

Bisher sind keine Alanindosimeter bekannt, die kostengünstig herstellbar sind und dennoch eine hohe Qualität, insbesondere Genauigkeit und Reproduzierbarkeit, besitzen.

Aus GB-A-1 303 278 und JP-A-63 113382 sind weitere Alanindosimeter mit polymeren Bindemitteln bekannt. In US-A-4 668 714 und von T. Tokima et al. (International Journal of Radiation Applications and Instrumentation Part A, Band 40, 1989, Seite 851 ff.) werden Alanindosimeter in Schichtform vorgeschlagen, die durch einen Preßvorgang bzw. ein schichtförmiges Aufbringen in eine Form hergestellt werden.

Die Aufgabe der Erfindung ist es, ein verbessertes Alanindosimeter, das eine hohe Genauigkeit und Reproduzierbarkeit besitzt und einen flexiblen Einsatz an beliebigen Meßpositionen erlaubt, und ein Verfahren zur Dosimeterherstellung anzugeben, wobei das Verfahren insbesondere die Erzielung einer hohen Chargenhomogenität gewährleisten soll.

Diese Aufgabe wird durch die Bereitstellung eines Dosimetermaterials mit den Merkmalen gemäß Patentanspruch 1, ein entsprechendes Alanindosimeter gemäß Patentanspruch 4 und ein Verfahren zur Herstellung des Dosimetermaterials mit den Merkmalen von Patentanspruch 7 gelöst. Vorteilhafte Ausführungsformen ergeben sich aus den abhängigen Ansprüchen.

Erfindungsgemäß wird insbesondere ein Dosimetermaterial angegeben, das neben der Dosimetersubstanz Alanin ein Bindemittel aufweist, das Polyoktenamere und g.g.f. Polystyrole enthält. Die Polyoktenamere haben vorzugsweise einen hohen trans-Anteil (sogenannte Trans-Polyoktenamere).

Das erfindungsgemäße Dosimetermaterial wird vorzugsweise als Dosimeterfolie durch ein Schichtbildungsverfahren hergestellt, bei dem zunächst als Dosimetersubstanz Alanin in einem Dispergierschritt mit einem Bindemittel, das ein Trans-Polyoktenamer und ggf. Polystyrol enthält, gemahlen, und dann die dabei gebildete Suspension in Schichtform getrocknet wird. Hierzu wird vorzugsweise die Suspension auf eine Trägerfolie aufgebracht, auf der die Trocknung erfolgt. Die Dosimeterfolie kann nach dem Trocknen im Zusammenhalt mit der Trägerfolie oder getrennt von dieser verwendet werden (trägergestützte bzw. selbsttragende Dosimeterfolie). Die Aufbringung der Alanin-Bindemittel-Suspension erfolgt vorzugsweise durch ein Begießverfahren auf flexiblen Trägerfolien.

Durch wiederholtes Begießen kann das Dosimetermaterial auch zu dicken Schichten verarbeitet werden, die anschließend in tablettenförmige Dosimeter zerteilt werden.

Ein erfindungsgemäßes Alanindosimeter enthält mindestens eine selbsttragende oder trägergestützte Dosimeterfolie bzw. Dosimetertabletten oder es wird allein durch diese gebildet.

Das erfindungsgemäße Dosimetermaterial besitzt die folgenden Vorteile.

Die Dosimeterfolie besitzt eine hohe Flexiblität. Dies bezieht sich sowohl auf die flexible Einsetzbarkeit an beliebigen Positionen eines Materials oder in einem bestrahlten Raum als auch auf die mechanische Flexibilität oder Biegsamkeit. Die erfindungsgemäße Dosimeterfolie ist mit dem Prinzip herkömmlicher Farbumschlagdosimeter einfach kombinierbar, indem in die Alanin-Bindemittelschicht zusätzlich Substanzen eingebracht werden, die unter Strahleneinwirkung zu einer vorbestimmten Farbänderung führen. Durch diese Kombination mit optischen, z.B. farblich abgestuften, Indikatoren wird eine berührungslose Überwachung von geschlossenen Strahlungsvorrichtungen möglich. Hierbei ist lediglich die Farbindikatorsubstanz vorzugsweise so auszuwählen, daß deren Schwellwert für einen Farbumschlag geringfügig unterhalb des im jeweiligen Einsatz vorgesehenen Meßbereichs des Alanindosimeters liegt,

Die erfindungsgemäßen Dosimeterfolien (und -tabletten) bzw. Alanindosimeter besitzen eine hohe Dosimeter- oder Chargenhomogenität, reproduzierbare Empfindlichkeit und Reproduzierbarkeit der Zahl und Verteilung paramagnetischer Zentren. Die Erfindung erlaubt den Einsatz geringer Alaninmengen (dünne Dosimeterfolien) sowie die Messung niedriger Dosiswerte. Letzteres wird dadurch ermöglicht, daß die eingesetzten Bindemittel ein in der Regel vernachlässigbar niedriges Nullsignal (Untergrund) besitzen.

Schließlich erlaubt die erfindungsgemäße Verfahrensweise ein besonders materialschonendes Verarbeiten der Ausgangsstoffe. Dadurch werden im Produktionsprozeß nur eine geringe Anzahl freier Radikale erzeugt, was für die Homogenität, Reproduzierbarkeit und ein geringes Nullsignal vorteilhaft ist. Außerdem erlaubt es das erfindungsgemäße Verfahren, die Dosimeter mit geringem Aufwand (geringen Kosten) unter hoher Qualität herzustellen.

Im folgenden wird das erfindungsgemäße Verfahren beispielhaft beschrieben.

Zunächst wird eine Suspension oder Lösung der aktiven Substanz (Alanin) mit mindestens einem Bindemittel vorbereitet. Alanin wird in einem organischen oder wässrigen System unter Zusatz des Bindemittels dispergiert bzw. gelöst (Lösungsmittel z.B. aus der Gruppe der Benzole oder Alkohole oder Mischungen daraus mit Wasser). Die Mengenverhältnisse von Alanin zum Bindemittel werden geeignet in Abhängigkeit von den gewünschten Filmbildungseigenschaften einerseits und der Viskosität bei der Dispergierung andererseits ausgewählt. Die Viskosität ist bei maximal 50°C vorzugsweise kleiner oder gleich 1000 mPas. Als Bindemittel wird erfindungsgemäß ein Polyoktenamer verwendet. Diese Bindemittel zeichnen sich in vorteilhafter Weise durch ein geringes strahlungsinduziertes Eigensignal (rund 0,25% des auf die Masse normierten Alaninsignals) aus. Das Massenverhältnis von Alanin zu Bindemittel beträgt bei flexiblen Dosimeterfolien maximal 1:1. Erfindungsgemäß kann der Dispersion bzw. Lösung aus Alanin und Bindemittel eine Substanz zugesetzt werden, die als Plastifikator und Stabilisator wirkt. Vorzugsweise wird als Plastifikator Glycerinester eingesetzt. Der Massenanteil in Bezug auf die übrigen Komponenten beträgt vorzugsweise weniger als 0,5%.

Die Begußformulierung kann dahingehend modifiziert werden, daß der Massenanteil des Alanin bis auf das Doppelte des Bindemittelanteils erhöht wird. Dann ergeben sich jedoch Beschränkungen hinsichtlich der Folienflexibilität.

Die Herstellung des Dosimetermaterials erfolgt durch Gießen der Suspension oder Lösung auf eine sich bewegende Trägeroberfläche. Die Trägeroberfläche kann vor dem Begießen einer Vorbehandlung unterzogen werden, die einer Reinigung und/oder einer Beeinflussung der Haftungseigenschaften der Trägeroberfläche dient.

Die Reinigung kann unter Verwendung bekannter Verfahren (z.B. Ultraschallbehandlung, Naßverfahren u. dgl.) derart durchgeführt werden, daß sämtliche Fremdpartikel mit einer Größe oberhalb 5 µm von der Trägeroberfläche entfernt werden.

Die Beeinflussung der Haftungs- oder Ablösungseigenschaften der Trägeroberfläche erfolgt je nachdem, ob eine trägergestützte oder eine selbsttragende Dosimeterfolie hergestellt werden soll. Vorzugsweise wird eine Haftschicht oder eine Ablöseschicht aufgebracht. Die Aufbringung erfolgt durch Beguß mit einer herkömmlichen Begießeinrichtung inbesondere unter Verwendung üblicher Walzenauftragssysteme (Walzenkombination, Rasterwalzen u. dgl.). Für die Bildung einer Haftschicht werden Bindemittel aus der gleichen Stoffgruppe wie die Bindemittel verwendet, die in der Dosimeterfolie enthalten sind. Außerdem werden dem Ansatz für die Haftschicht-Begußlösung ein geeignetes Lösungsmittel (Viskosität) und ein Mittel zum Anlösen der jeweiligen Trägeroberfläche beigefügt. Bei Beschichtung einer Trägeroberfläche aus Polyester oder Polyethylen wird das Anlösemittel vorzugsweise aus der Stoffgruppe der Phenole ausgewählt.

Zur Bildung einer Ablöseschicht werden geeignete Ablösemittel vom Typ der Wachse oder Silikone verwendet, die ein Ablösen der Dosimeterfolie von der Trägeroberfläche nach Trocknung problemlos ermöglichen. Bei der Herstellung selbsttragender Dosimeterfolien ist die Aufbringung der Ablöseschicht jedoch nicht zwingend erforderlich. Ein Ablösen der Dosimeterfolie von der Trägeroberfläche kann auch durch geeignet gewählte Glycerinester als Plastifikatoren in der Dosimeterfolie erzielt werden. In diesem Fall wird die Trägeroberfläche lediglich vor dem Beguß gereinigt.

Vor Vergießen der möglicherweise vorgesehenen Haftschicht oder Ablöseschicht werden die entsprechende Begußlösungen gereinigt. Dazu werden vorzugsweise übliche Filtrationsmethoden eingesetzt.

Die Trägeroberfläche wird vorzugsweise durch eine Oberfläche einer Trägerfolie gebildet. Als Folienmaterial kommen z.B. Polyester oder Polyethylen zum Einsatz. Es sind aber auch alle anderen flexiblen Materialien in Form von Folien, dünnen Schichten oder (ggf. beschichteten) Geweben denkbar. Auf die Trägeroberfläche wird, nachdem diese der Vorbehandlung unterzogen worden sein kann, die Suspension oder Lösung der aktiven Substanz (Alanin) mit dem Bindemittel (und gegebenenfalls weiteren Zusätzen) in einem Begießvorgang aufgebracht.

Der Begießvorgang wird vorzugsweise unter Verwendung von Gießwerkzeugen durchgeführt, die in der photochemischen Industrie, z.B. zum Beguß von photographischen Materialien, eingesetzt werden. Die Geometrie der Gießwerkzeuge ist wesentlich für die Beschichtungsqualität, insbesondere für die Erzielung einer hohen Gleichmäßigkeit der Naßschichten nach dem Beguß. Die vorliegende Erfindung lehrt erstmalig, daß Gießwerkzeuge, die zum Einsatz in der photochemischen Industrie ausgebildet sind, bei der Herstellung von Alaninfoliendosimetern verwendet werden.

Als Gießwerkzeuge werden solche Gießmittel bevorzugt, die ein Auflegen eines im Werkzeug vorgefertigten Flüssigkeitsfilm auf eine laufende Materialbahn ermöglichen. Ersatzweise sind auch Walzensysteme oder Rakelsysteme zum Aufbringen des Materials auf die Trägeroberfläche möglich, wodurch jedoch die Schichtgleichmäßigkeit beschränkt ist. Beim Begießvorgang werden Vorkehrungen zur Erhaltung der Sauberkeit der Substanzen und der Verarbeitungsstrecke getroffen, um den Einbau von Fremdkörpern (Schmutz oder Staub) zu vermeiden.

Beim Begießvorgang wird durch das Gießwerkzeug pro Zeiteinheit eine bestimmte Materialmenge auf die Trägeroberfläche geliefert. Diese Materialmenge wird derart gewählt, daß sich auf der Trägeroberfläche die gewünschte Materialschichtdicke bzw. am Ende die gewünschte Dosimeterfoliendicke ergibt. Je nach Anwendungsfall wird die Dosierung so gewählt, daß die Foliendicke im Bereich unterhalb 2 mm, vorzugsweise 0,01 bis 0,5 mm, liegt. Die erfindungsgemäße Herstellung der Dosimeterfolie durch einen Begießvorgang ermöglicht es, die Dosimeterschichtdicke derart gleichmäßig herzustellen, daß die Dickenschwankungen innerhalb einer Charge unterhalb von 1% liegen.

Dem Naßauftrag (Begießvorgang) schließt sich eine herkömmlich bekannte Konvektionstrocknung an. Der Trocknungsvorgang wird unter Einhaltung bestimmter Trocknungsbedingungen durchgeführt. Die Trocknungsbedingungen umfassen z.B. vorbestimmte Temperatur- und/oder Feuchtegradienten und vorbestimmte Strömungsverhältnisse. Durch die Trocknungsbedingungen kann eine qualitative Materialbeeinflussung erreicht werden. Die Trocknungsbedingungen werden so ausgewählt, daß die Homogenität der Schichtdicke auch im trockenen Zustand gesichert ist.

Die Erfindung ist nicht notwendig an eine Konvektionstrocknung gebunden. Es sind auch andere Trocknungstechniken denkbar, sofern diese die anwendungsabhängig gewünschte Schichtqualität gewährleisten.

Nach dem Trocknen liegt ein Trägermaterial vor, auf dessen Oberfläche die Dosimeterfolie ausgebildet ist. Bei Anwendung als trägergestützte Dosimeterfolie muß nun lediglich noch eine Größenanpassung erfolgen. Bei Anwendung als trägerfreie Dosimeterfolie erfolgt eine Trennung der Dosimeterfolie von dem Trägermaterial. Selbsttragende Dosimeterfolien werden dann bevorzugt, wenn Fehler- oder Rauschsignale durch den Untergrund oder das Trägermaterial bei der Messung insbesondere geringer Strahlungsintensität nach Möglichkeit vermieden werden sollen. Die Untergrenze der Schichtdicke von trägerfreiem Dosimeterfolienmaterial wird durch dessen Handhabbarkeit bestimmt. Die Untergrenze liegt größenordnungsmäßig bei 20 µm, kann jedoch bei besonderen Vorkehrungen zur Handhabung auch niedriger liegen.

Die erfindungsgemäße Verfahrensweise kann dahingehend modifiziert werden, daß der Begießvorgang nach dem Trocknen jeweils wiederholt durchgeführt wird. Damit können beliebige Schichtdicken mit hoher Homogenität erzielt werden, die größer als die mit einem Begießvorgang erzielbare Schichtdicke sind. Bei der Mehrfachbeschichtung wird der Suspension oder Lösung vorzugsweise ein geeignetes Lösemittel zugesetzt. Dies ermöglicht, daß bei Aufbringung einer Naßschicht auf einer bereits getrockneten Folienschicht im Grenzbereich zwischen beiden ein Anlösevorgang auftritt, der zur Ausbildung eines einheitlichen homogenen Schichtverbundes führt.

Die dicken oder volumenartigen Schichten erlauben die Herstellung von Dosimetertabletten oder anderer Dosimeterformen. Hierzu werden die Schichten in geeigneter Weise zerkleinert. Beispielsweise werden Tabletten mit geeigneten Stanzwerkzeugen erzeugt.

Die erfindungsgemäße Verfahrensweise kann ferner dahingehend modifiziert werden, daß die Kombination mit einem Farbumschlagdosimeter nicht durch Zusatz von Indikatoren in die Begußlösung, sondern durch die separate Aufbringung eines Farbumschlagdosimeters erfolgt. Dies ermöglicht es insbesondere, unerwünschte Mehrfachbestrahlungen von Dosimeterfolien zu verhindern. Ferner ist es möglich, auf der fertigen, zugeschnittenen Dosimeterfolie ein Beschriftungsfeld anzubringen, das eine Chargennummer und Bestrahlungsdaten aufweisen kann. Außerdem kann das fertige Dosimetermaterial mit einem Haftmittel (z.B. Klebestreifen) zur Anbringung an einem Probenkörper versehen werden.

## Patentansprüche

1. Dosimetermaterial, das Alanin und mindestens ein Bindemittel enthält, **dadurch gekennzeichnet, daß** das Bindemittel ein Polyoktenamer enthält.

2. Dosimetermaterial gemäß Anspruch 1, bei dem das Bindemittel Polystyrol enthält.

3. Dosimetermaterial gemäß Anspruch 1 oder 2, bei dem das Massenverhältnis Alanin zu Bindemittel maximal 2:1 beträgt.

4. Dosimetermaterial gemäß Anspruch 1, 2 oder 3, das ferner einen Plastifikator enthält.

5. Alanindosimeter, das ein Dosimetermaterial gemäß einem der Ansprüche 1 bis 4 enthält.

6. Alanindosimeter gemäß Anspruch 5, bei dem das Dosimetermaterial durch eine Dosimeterfolie oder Dosimetertablette gebildet wird.

7. Verfahren zur Herstellung eines Dosimetermaterials gemäß einem der Ansprüche 1 bis 4, bei dem eine Suspension oder Lösung aus Alanin und dem mindestens einen Bindemittel durch Begießen auf eine Oberfläche einer Trägerfolie aufgebracht wird.

8. Verfahren gemäß Anspruch 7, bei dem zur Bildung der Suspension oder Lösung als Dosimetersubstanz Alanin mit mindestens einem Bindemittel eingesetzt wird, das ein Polyoktenamer und Polystyrol enthält.

9. Verfahren gemäß Anspruch 7 oder 8, bei dem nach dem Begießvorgang eine Konvektionstrocknung durchgeführt wird.

10. Verfahren gemäß einem der Ansprüche 7 bis 9, bei dem die Oberfläche der Trägerfolie einer Vorbehandlung unterzogen wird, die eine Reinigung und/oder eine Beeinflussung der Hafteigenschaften umfaßt.

11. Verfahren gemäß Anspruch 10, bei der die Vorbehandlung die Aufbringung einer Haftschicht oder einer Ablöseschicht umfaßt.

12. Verfahren gemäß einem der Ansprüche 7 bis 10, bei dem der Begießvorgang und der nachfolgende Trocknungsvorgang unter Verwendung von Anlösemitteln in der Suspension oder Lösung wiederholt durchgeführt wird.

## Claims

1. Dosimeter material which contains alanine and at least one binder, **characterized in that** the binder contains a polycyclo-octene.

2. Dosimeter material according to claim 1, in which the binder contains polystyrene.

3. Dosimeter material according to claim 1 or 2, in which the mass ratio of alanine to binder amounts to 2:1 at the most.

4. Dosimeter material according to claim 1, 2 or 3, which further contains a plasticizer.

5. An alanine dosimeter which contains a dosimeter material according to any of claims 1 to 4.

6. An alanine dosimeter according to claim 5, in which the dosimeter material is formed by a dosimeter film or a dosimeter tablet.

7. A method of making a dosimeter material according to any of claims 1 to 4, in which a suspension or solution of alanine and at the least one binder is applied by pouring on to a surface of a support film.

8. A method according to claim 7, in which alanine as dosimeter substance with at least one binder is used to form the suspension or solution, the binder containing a polycyclo-octene and polystyrene.

9. A method according to claim 7 or 8, in which convection drying is performed after the pouring operation.

10. A method according to any of claims 7 to 9, in which the surface of the support film is subjected to pretreatment which comprises cleaning and/or influencing the adhesion properties.

11. A method according to claim 10, in which the pretreatment comprises application of an adhesive layer or a release layer.

12. A method according to any of claims 7 to 10, in which the pouring operation and the following drying operation are carried out repeatedly using solubilizing means in the suspension or solution.

## Revendications

1. Matériau dosimètre comprenant de l'alanine et au moins un liant **caractérisé en ce que** le liant contient un polymère octène.

2. Matériau dosimètre selon la revendication 1 dans lequel le liant contient du polystyrène.

3. Matériau dosimètre selon la revendication 1 ou 2, dans lequel la proportion en masse alanine/liant est de 2:1 au maximum.

4. Matériau dosimètre selon la revendication 1, 2 ou 3 contenant en plus un plastifiant.

5. Dosimètre à alanine contenant un matériau dosimètre selon l'une des revendications 1 à 4.

6. Dosimètre à alanine selon la revendication -5 dans lequel le matériau dosimètre est formé d'une feuille dosimètre ou d'une pastille dosimètre.

7. Méthode de fabrication d'un matériau dosimètre selon l'une des revendications 1 à 4 dans laquelle une suspension ou une solution d'alanine et d'au moins un liant est versée sur la surface d'une plaque support.

8. Méthode selon la revendication 7 dans laquelle, afin de former une suspension ou une solution, l'alanine est employée comme substance dosimètre avec au moins un liant contenant un polymère octène et du polystyrène.

9. Méthode selon la revendication 7 ou 8 dans laquelle un séchage par convection a lieu après le processus de couverture.

10. Méthode selon l'une des revendication 7 à 9 dans laquelle la surface de la plaque support subit un pré-traitement comprenant un nettoyage et/ou une modification des propriétés d'adhésion.

11. Méthode selon la revendication 10 dans laquelle le pré-traitement comprend l'apport d'une couche adhésive ou d'une couche de pelliculage.

12. Méthode selon l'une des revendications 7 à 10 dans laquelle le processus de couverture et le séchage qui lui succède sont répétés en utilisant des agents mordants dans la suspension ou la solution.
